# EUROPEAN PATENT SPECIFICATION

(11) **EP 3 463 982 B1**
(45) Date of publication and mention of the grant of the patent: **14.09.2022**
(21) Application number: 17803498.9
(22) Date of filing: 24.05.2017
(51) Int. Cl.: H04N 7/18, B60K 35/00

(54) **VEHICLE DISPLAY WITH SELECTIVE IMAGE DATA DISPLAY**
FAHRZEUGANZEIGE MIT SELEKTIVER BILDDATENANZEIGE
AFFICHAGE DE VÉHICULE À AFFICHAGE SÉLECTIF DE DONNÉES D'IMAGES

(30) Priority: 24.05.2016 US 201662340697 P
(43) Date of publication of application: 10.04.2019
(73) Proprietor: Gentex Corporation, Zeeland, MI 49464 (US)
(72) Inventor: BOSTROM, David M., Zeeland Michigan 49464 (US); SMEYERS, Marc A., Zeeland Michigan 49464 (US)
(74) Representative: Müller-Boré & Partner Patentanwälte PartG mbB
(86) International application number: PCT/US2017/034228
(87) International publication number: WO 2017/205490

(56) References cited:
- WO-A1-2015/174383
- CN-U- 202 608 663
- US-A1- 2014 340 516
- US-A1- 2015 085 121
- US-A1- 2015 085 121
- US-A1- 2015 331 519
- US-A1- 2016 029 111

## Description

### TECHNICAL FIELD

The present disclosure generally relates to a display system for a vehicle and, more particularly, to a display system providing a rearward view from the vehicle that detects a display prompt based on detected speech to selectively display a particular region of a passenger compartment which the detected speech originated.

### BACKGROUND OF THE INVENTION

Display systems for vehicles may provide various benefits. Current display technology may not provide for some features that may be beneficial for display in an automotive vehicle. The display system introduced herein provides various improvements.

US 2015/085121 A1 provides for a rear-view mirror and modular monitor system. The system includes multiple cameras, some in the vehicle, bus and/or truck, as well as some cameras outside the vehicle, bus and/or truck. The system provides the driver with an opportunity to view what is happening, for example, in the back rows of the bus and/or cabin, while also using the mirror to look at objects in the bus and/or cabin that are visible using the mirror. The rear-view mirror and modular monitor system is configured to be easily assembled and/or disassembled when necessary for maintenance and/or to replace parts.

WO 2015/174383 A1 provides for a display device including a passenger image capture unit configured to capture information of a passenger who is riding in a vehicle together with a driver of the vehicle. An image generator is configured to generate an image that shows a condition of the passenger based on the information that is captured by the passenger image capture unit. An image display unit configured to superimpose the image with a visual field of the driver, and configured to display the image in the visual field of the driver.

US 2016/029111 A1 provides for a sound system of a vehicle that includes a plurality of microphones disposed in a cabin of the vehicle, a plurality of speakers disposed in the cabin of the vehicle, and a sound processor operable to process microphone output signals of the microphones to determine a voice signal of a speaking occupant in the vehicle at or near one of the microphones. The sound processor generates a processor output signal that is provided to at least some of the speakers. Responsive to the processor output signal, the at least some of the speakers generate sound representative of the voice signal of the speaking occupant to direct the sound towards other occupants in the vehicle, while one or more speakers at or near the seat occupied by the speaking occupant do not generate sound representative of the voice signal of the speaking occupant.

US 2014/340516 A1 provides for a rearward viewing system for an automotive vehicle that comprises an image display mounted proximate to a front windshield of the vehicle. An exterior image sensor captures a first image directed externally of the vehicle with a first field of view. An internal image sensor captures a second image directed internally of the vehicle with a second field of view. An image integrator merges the first and second images according to a predetermined alignment of the first and second fields of view, wherein the second image is muted in the merged image so that the first image is emphasized when displayed on the image display.

### SUMMARY OF THE INVENTION

The invention is set out in the appended set of claims.

These and other features, advantages, and objects of the present disclosure will be further understood and appreciated by those skilled in the art by reference to the following specification, claims, and appended drawings.

### BRIEF DESCRIPTION OF THE DRAWINGS

The present disclosure will become more fully understood from the detailed description and the accompanying drawings, wherein:
FIG. 1 is a perspective view of a passenger compartment of a vehicle comprising a display system;
FIG. 2 is an elevational view of a vehicle comprising a display device configured to display image data including a feature of a passenger of the vehicle;
FIG. 3 is a detailed view a display device configured to display image data including a feature of a passenger of the vehicle;
FIG. 4 is an elevational view of the display system of FIG. 3 further demonstrating a sound detecting embodiment of the display device; and
FIG. 5 is a block diagram of a display system in accordance with the disclosure.

### DETAILED DESCRIPTION OF EMBODIMENTS

The present illustrated embodiments reside primarily in combinations of method steps and apparatus components related to an image sensor system and method thereof. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

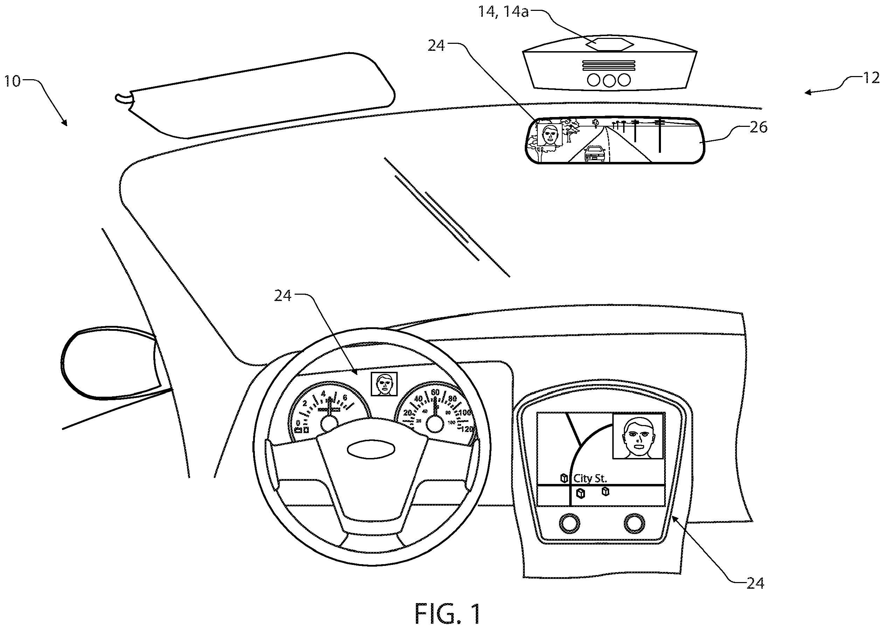

Referring to FIGS. 1, 2, and 3, a vehicle 10 is shown equipped with a display system 12. In various embodiments, the display system 12 comprises at least one imager 14. The imager 14 corresponds to a plurality of imagers 14. The plurality of imagers 14 includes a first imager 14a configured to capture a first image data 16a corresponding to an interior field of view 17 of a passenger compartment 18 of the vehicle 10. The plurality of imagers 14 further comprises a second imager 14b configured to capture a second image data 16b corresponding to a scene directed to an exterior region 20 proximate the vehicle 10. In an exemplary embodiment, exterior region 20 corresponds to a rearward directed field of view 21 relative to a forward direction 22 of the vehicle 10.

The image data 16a and 16b captured by the imager 14 are displayed by the display system 12 on a display device 24. In some embodiments, the display device 24 corresponds to a rearview display device 26 configured to demonstrate the second image data 16b of the rearward directed view 21. In this configuration, the display system 12 may be operable to display a series of images captured corresponding to scenes behind the vehicle 10. The scenes may include one or more objects, landscapes, road features, and any other visual information that may be captured by the second imager 14b. The imagers 14 as discussed herein are in communication with a controller and may comprise pixel arrays configured to capture the image data 16 in the form of pixel information. In the various implementations discussed herein, the display system 12 is configured to process the image data 16 captured by one or more of the imagers 14 and display a feature 28 or portion of one or more objects 30 identified in the image data 16.

In an exemplary embodiment, the display system 12 is configured to display the image data 16a on a first portion 32a of display screen 32 of the display device 24. Additionally, the display system 12 is configured to display the second image data 16b on a second portion 32b of a display screen 32. The first image data 16a may be superimposed over or divided in a separate display window over the second image data 16b similar to a picture-in-picture display. As discussed previously, the first image data 16a corresponds to a scene inside the passenger compartment 18, and the second image data 16b corresponds to a scene of the exterior region 20. During operation, the second image data 16b is displayed on the second portion 32b to provide rearview operational information configured to assist an operator or passenger 34 of the vehicle 10 in viewing the rearward directed field of view 21.

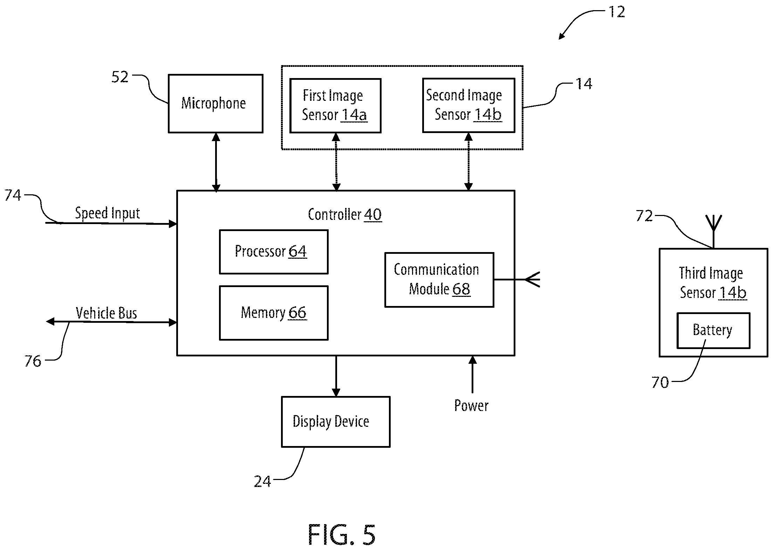

The first image data 16a and/or the second image data 16b is displayed selectively on the display screen 32 throughout operation of the vehicle 10. Additionally, in some embodiments, the first image data 16a and/or the second image data 16b may be selectively displayed on the display screen 32 in response to one or more of a detection of a feature or identification of an event in the image data 16. The image data 16a and/or 16b is selectively displayed in response to one or more input signals or operating conditions of the vehicle 10. The display system 12 may comprise a controller 40 configured to identify the feature or the event in the image data 16. Additionally, the controller 40 is configured to selectively display the image data 16a and/or 16b in response to the one or more input signals or operating conditions of the vehicle 10. In this configuration, the display system 12 may provide for a flexible solution that may be utilized to display image data 16 for a variety of diverse applications. The controller 40 is further discussed in reference to FIG. 5.

In some embodiments, the controller 40 may comprise one or more processors and/or control circuits configured to process the image data 16 received from the first imager 14a and/or the second imager 14b. For example, in some embodiments, the controller 40 processes the first image data 16a from the first imager 14a to identify a display-prompt (e.g., a gesture, motion, speech, or other form of input or stimulus) of a passenger 34 of the vehicle 10. In response to detecting the display-prompt of the passenger 34, the controller 40 controls the display system 12 to display a portion of interest of the passenger 34 in a display window 42 on the display screen 32. The portion of interest corresponds to a facial region 44 of the passenger 34 that may be cropped and/or otherwise processed for display in the display window 42. In this configuration, the display system 12 is configured to selectively display the portion of interest of the image data 16a in response to the controller 40 identifying the display-prompt. Though described as a gesture, motion, or speech, the display-prompt may correspond to various inputs or stimuli received by the controller 40. Accordingly, the display system 12 may be configured to provide a variety of display functions based on various inputs identified or received by the controller 40.

In some embodiments, the controller 40 may be operable to crop the image data 16a focusing on the region of interest. The region of interest may be identified by the controller 40 based on a facial recognition process applied to the image data 16a thereby identifying a facial region 44 of the passenger 34 or occupant. The identified facial region 44 may then be cropped by the controller 40 to generate cropped image data 16a focusing on the facial region 44 of the occupant. In this way, the controller 40 is operable to demonstrate the relevant information in the display window 42 and limit the display of additional information that may not relate to a communication from the passenger 34.

As discussed herein, a passenger 34 may correspond to a person (e.g., adults, children), an animal (e.g., a pet), and/or any object of interest in the passenger compartment 18. The imagers 14 discussed herein are demonstrated in fixed locations in connection with the vehicle 10. However, in some embodiments, the imagers 14 may be flexibly utilized in various portions of the vehicle 10. In such embodiments, one or more of the imagers 14 may be configured to communicate wirelessly (e.g., via Bluetooth^{™}, WiFi^{™}, ZigBee^{®}, etc.) with the controller 40. In this configuration, one or more of the imagers 14 may be selectively positioned in connection with the vehicle 10 such that the controller 40 may detect a display-prompt corresponding to motion of objects positioned in a field of view.

In some embodiments, the at least one imager 14 may comprise a third imager 14c. Though designated with the term, third, the third imager 14c may correspond to the at least one imager 14 or may be utilized in any combination with the first imager 14a and/or the second imager 14b. In an exemplary embodiment, the third imager 14c may be configured to communicate wirelessly with the controller 40 and be selectively positioned to capture image data of a selectable field of view 45. The selectable field of view 45 may be selected to include one or more objects of interest 47. The controller 40 may be configured to detect motion of the one or more objects 30 of interest in image data received from the third imager 14c. The motion of the one or more objects 30 of interest in the image data may be detected by the controller 40 to identify the display-prompt. In response to the display-prompt, the controller 40 may selectively display one or more of the objects 30 of interest in the display window 42.

An object of interest as described herein may refer to any object, scene, or region captured in a field of view of the imager 14. For example, an object of interest may correspond to a trailer hitch 46a, a luggage compartment 46b, a fuel door 46c, an engine 46d, a wheel 46e, an underbody component 46f, a blind spot 46g, or any portion of the vehicle 10. In some embodiments, the object of interest may correspond to a region of interest 47 that may be monitored for motion of an object that may enter the region 47. For example, in some embodiments, the third imager 14c may be configured to capture image data corresponding to a blind spot 46g of the vehicle 10. In this configuration, the controller 40 may selectively display an object (e.g., a nearby vehicle) entering the region of interest 47 in response to a detection of motion of the object in the region of interest 47.

Though discussed as having a modular or portable wireless design configured to be selectively located or positioned on the vehicle 10, the third imager 14c may be located in a fixed position in connection with the vehicle 10. Additionally, the first imager 14a and/or the second imager 14b may be configured to communicate the image data 16 to the controller 40 wirelessly. Accordingly, the imager 14 may be utilized in a variety of applications to display information corresponding to various portions of the vehicle 10. Further details regarding the imagers 14 and controller 40 are discussed in reference to FIG. 5.

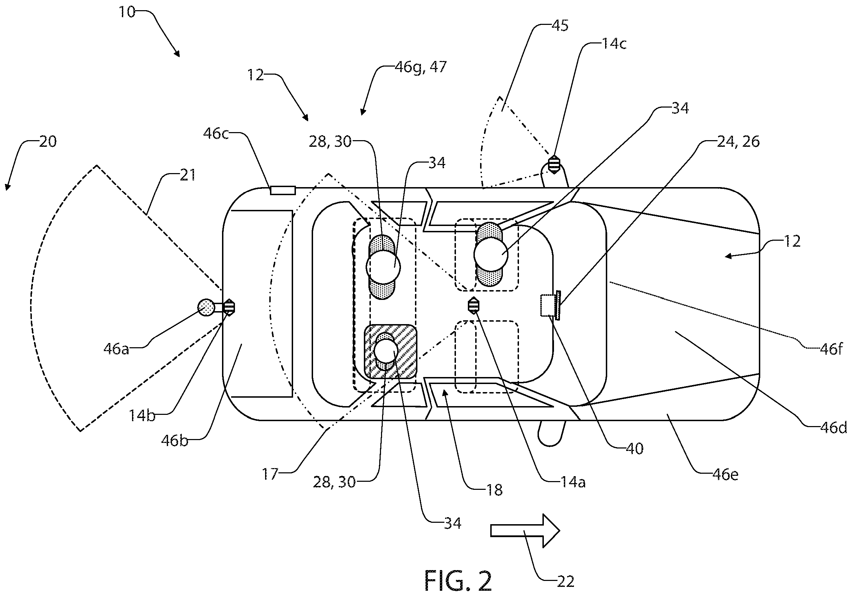

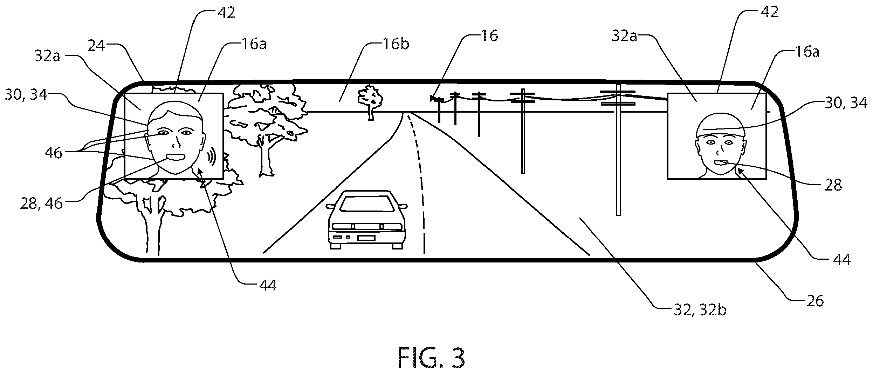

Still referring to FIGS. 2 and 3, the controller 40 may be configured to identify the display-prompt as a motion of a facial feature 46 (e.g., a mouth, jaw, eye, etc.) that may correspond to speech of the passenger 34. In response to the detection of the display-prompt in the image data 16a, the controller 40 displays the facial region 44 of the passenger 34 on the display device 24. The controller 40 may continue to detect movement of the one or more facial features 46 and display the facial region 44 in the display window 42 until the motion of facial features 46 is not detected for a predetermined period of time. For example, the controller 40 may terminate the display of the image data 16a of the facial region 44 of the passenger 34 on the display device 24 after a predetermined period of time elapses following the completion of the speech of the occupant. In this way, the controller 40 may selectively display the facial region 44 and the display window 42 during temporal periods during which the passenger 34 may be moving or speaking.

The motion detected by the controller 40 corresponding to the display-prompt may correspond to a detected motion of one or more of the facial features 46 exceeding a motion threshold. The controller 40 may identify that the detected motion has exceeded the motion threshold by identifying motion of pixel data corresponding to the one or more facial features 46 moving in excess of a predetermined distance over a plurality of consecutive frames captured by the first imager 14a. Such an identification of the one or more facial features 46 may result in the controller 40 triggering the display-prompt and display the facial region 44 of the passenger 34 in the display window 42 for a predetermined period of time.

Once the facial region 44 is displayed on the display device 24, the controller 40 may continue to process the first image data 16a to determine if the one or more facial features 46 continue to move in excess of the motion threshold. The controller 40 may continue to display the facial region 44 of the first image data 16a in the display window 42 for a predetermined period of time (e.g., 2 seconds, 5 seconds, etc.). If the controller 40 detects the motion of the one or more facial features 46 exceeding the motion threshold, the controller 40 may reset the predetermined period of time and continue to display the facial region 44 in the display window 42. The controller 40 may continue to display the facial region 44 until the predetermined period of time expires without the motion threshold being exceeded. In this way, the controller 40 may display the facial region 44 in the display window 42 while the passenger 34 is speaking.

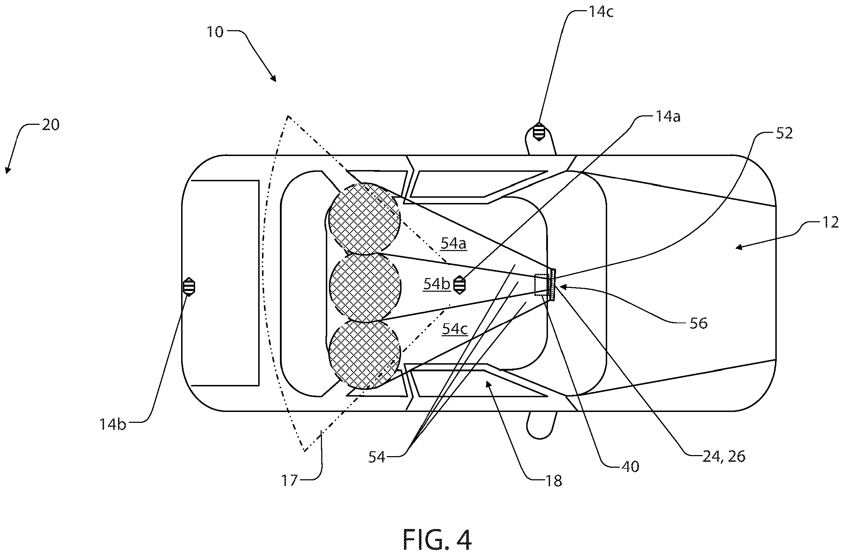

Referring now to FIG. 4, in some embodiments, the controller 40 comprises microphones 52 that are configured to detect speech or noise corresponding to the passengers 34 of the vehicle 10. The detection of such speech is also utilized by the controller 40 as a display-prompt. The one or more microphones 52 correspond to a microphone array operable to detect a region in the passenger compartment 18 from which the noise or speech originated. For example, the controller 40 is configured to receive an audio signal from the one or more microphones 52. Based on the audio signal, the controller 40 identifies whether a noise in the audio signal originated in one of a plurality of regions 54 of the passenger compartment 18. For example, the controller 40 is operable to distinguish if the noise originated in a first region 54a, a second region 54b, or a third region 54c of the passenger compartment 18. The controller 40 then utilizes this information to activate the display of the facial region 44 in the display window 42. In some embodiments, the audio signal is utilized in combination with the first image data 16a to identify the display-prompt.

The one or more microphones 52 utilize various detection methods to distinguish the region 54 of the passenger compartment 18 from which the noise originated. To enable such detection, the one or more processors 64 of the controller 40 may comprise a digital signal processor (DSP) in communication with the one or more microphones 52. The DSP may process the audio signals from the microphone 52 or microphone array via beam forming, and/or polar steering to determine a particular region of the plurality of regions 54 from which a noise originated. Further details regarding the detection of a region from which one or more noises may be detected are discussed in United States Patent No. 7,447,320 entitled, "Vehicle Accessory Microphone,". Accordingly, the controller 40 utilizes the indication of the region 54 from which a noise in the passenger compartment 18 originated to search the first image data 16a for a facial region 44 to display on the display device 24. The controller 40 may continue to display the facial region 44 throughout a detection of the motion or speech originating from the region 54. The controller 40 may continue to display the facial region 44 on the display device 24 for a predetermined time as previously discussed.

The one or more microphones 52 may be disposed in a rearview assembly 56, which may correspond to the display device 24. The rearview assembly 56 may be configured to operate in a mirror mode as well as a display mode. In the display mode, the display device 24 may be configured to display the image data 16 on the display screen 32. Additionally, in some embodiments, the rearview assembly 56 may correspond to an electro-optic or electrochromic mirror assembly. Accordingly, the disclosure may incorporate a display screen 32 for use in an automotive vehicle that may correspond to a mirror-display as disclosed in U.S. Pat. Nos. 8,582,052; 6,870,655; 6,737,630; 6,572,233; 6,552,326; 6,420,800; 6,407,468; 6,346,698; 6,170,956; 5,883,605; and 5,825,527; and U.S. Pat. Application Publication No. 2009/0096937 A1 entitled "Vehicle Rearview Assembly Including a Display for Displaying Video Captured by a Camera and User Instructions," all commonly assigned to Gentex Corporation.

In operation, the controller 40 is operable to detect and control one or more functions of the display device in response to a voice recognition received via the one or more microphones 52. In this configuration, display device 24 may be configured to enable hands-free operation. The DSP of the controller 40 may process one of more speech signals received by the one or more microphones in various speech situations. The DSP processes the speech from a desired or identified spatial location (i.e., the location in which the driver or other passengers are located). Arrival time differences of the speech signal to a plurality of microphones may be used to narrow and filter conflicting noises. As provided by the claimed embodiment of the invention, the DSP's comprise stored information of human speech including fundamental frequencies that may be used to filter voice signals. As a result, the controller 40 is configured to process signals and frequencies that are likely to contain speech and identify one or more commands configured to control the operation of the display device 24 or one or more systems in communication with the controller 40.

Though discussed in detail in reference to the rearview assembly 56, the one or more microphones 52 may be disposed in various portions of the vehicle 10. For example, the one or more microphones 52 may be disposed in a headliner, a pillar, a seat, door panel, or various portions of the vehicle 10. Accordingly, the microphone 52 may be flexibly positioned in the vehicle 10 to suit a particular application.

The disclosure provides for the controller 40 to utilize for example the detection of motion of the facial features 46, and at least an indication of a region 54 from which a noise in the passenger compartment 18 originated to identify a passenger 34 is speaking in the passenger compartment 18. Based on the detection, the controller 40 identifies a display-prompt and display the first image data 16a of the passenger compartment 18 in the display window 42. Additionally, the controller 40 may display the second image data 16b on the display screen 32 throughout operation of the vehicle 10 and/or in response to various vehicle operating conditions. Accordingly, the display system 12 may selectively display the first image data 16a and/or the second image data 16b to assist in operation of the vehicle 10.

Referring now to FIG. 5, a block diagram of the display system 12 is shown. The imager 14 (e.g., the first imager 14a and/or the second imager 14b) is shown in communication with the controller 40. A pixel array of the imagers 14 may correspond to a complementary metal-oxide semiconductor (CMOS) image sensor, for example, a CMOS active-pixel sensor (APS) or a charge coupled device (CCD). Each of the pixels of the pixel array may correspond to a photo-sensor, an array of photo-sensors, or any grouping of sensors configured to capture light. The controller 40 may comprise a processor 64 operable to process the image data as supplied in analog or digital form from the imager(s) 14. In various embodiments, the processor 64 may be implemented as a plurality of processors, a multicore processor, or any combination of processors, circuits, and peripheral processing devices.

In some embodiments, one or more of the imagers 14 may correspond to infrared imaging devices. Such devices may comprise lighting modules configured to project infrared radiation. For example, the second imager 14b may correspond to an infrared imaging device. In such an embodiment, the controller 40 may be configured to receive infrared image data corresponding to one or more of the passengers 34 of the vehicle 10. In this configuration, the controller 40 may utilize the infrared image data to identify the passenger 34 based on a retinal identification or various identification algorithms.

The controller 40 may further comprise a memory 66. The memory 66 may comprise various forms of memory, for example, random access memory (RAM), dynamic RAM (DRAM), synchronous (SDRAM), and other forms of memory configured to store digital information. The memory 66 may be configured to store the image data 16 (e.g., the first image data 16a and/or the second image data 16b) for processing. Processing the image data 16 may comprise scaling and cropping the image data 16 to adjust a position and apparent size of the image data 16 as it is output to the display screen 32 of the display device 24. In some embodiments, the memory 66 may further be configured to store additional programming information including method and processes for operation of the display system 12.

The one or more imagers 14 may be configured to communicate with the controller 40 via a wired or wireless connection to suit a desired application. Some examples of wireless communication protocols may include Bluetooth^{™}, WiFi^{™}, ZigBee^{®}, and similar wireless communication protocols including those yet to be developed. Accordingly, the controller 40 may comprise a communication module 68 configured to communicate wirelessly with one or more of the imagers 14. In a wireless configuration, the imagers 14 may correspond to a modular configuration comprising a battery 70 as exemplified by the third imager 14c. The modular configuration may further comprise a communication circuit 72 configured to communicate wirelessly with the communication module 68 of the controller 40.

The controller 40 may further be in communication with a plurality of inputs - for example, a speed input 74, and a vehicle bus 76. The speed input 74 may provide a signal communicating a speed of the vehicle 10 via a speedometer or any device operable to measure and communicate data corresponding to the speed of a vehicle 10. The vehicle bus 76 may be implemented using any suitable standard communication bus, such as a Controller Area Network (CAN) bus, a Local Interconnect Network (LIN) bus, etc. The vehicle bus 76 may be configured to provide a variety of additional information to the controller 40. Such information may correspond to one or more vehicle states, for example, a gear selection, passenger occupancy, a headlight activation, etc., which may be utilized by the controller 40 to control the display of the image data. For example, the controller 40 may selectively display the first image data 16a, the second image data 16b, and or a third image data 16c in response to one or more vehicle states.

It will be appreciated that embodiments of the disclosure described herein may be comprised of one or more conventional processors and unique stored program instructions that control one or more processors to implement, in conjunction with certain non-processor circuits, some, most, or all of the functions of an image sensor system and method thereof, as described herein. The non-processor circuits may include, but are not limited to, signal drivers, clock circuits, power source circuits, and/or user input devices. Alternatively, some or all functions could be implemented by a state machine that has no stored program instructions, or in one or more application specific integrated circuits (ASICs), in which each function or some combinations of the functions are implemented as custom logic. Of course, a combination of the two approaches could be used. Thus, the methods and means for these functions have been described herein. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

It should be appreciated by those skilled in the art that the above described components may be combined in additional or alternative ways not explicitly described herein. Modifications of the various implementations of the disclosure will occur to those skilled in the art and to those who apply the teachings of the disclosure. Therefore, it is understood that the embodiments shown in the drawings and described above are merely for illustrative purposes and not intended to limit the scope of the disclosure, which is defined by the following claims.

## Claims

1. A display system (12) for a vehicle (10) comprising:
a rearview display device (26) being an electrochromic mirror assembly disposed in a passenger compartment (18) of the vehicle (10), the display device (26) comprising a screen (32), wherein a microphone array is disposed in the rearview display device (26), wherein the microphone array is configured to detect speech from the passenger compartment and to identify a region (54a; 54b; 54c) of the passenger compartment from where the speech of an occupant originated;
a first imager (14a) configured to capture a first image data (16a) corresponding to a field of view (17) of the passenger compartment (18) of the vehicle (10);
a second imager (14b) configured to capture a second image data (16b) corresponding to a rearward directed field of view (21) from the vehicle (10); and
a controller (40) configured to:
display the second image data (16b) on a second portion (32b) of the screen (32); and
detect a display prompt based on detected speech, wherein the display prompt comprises the detected speech of an occupant in the passenger compartment;
determine a particular region (54a; 54b; 54c) which the speech originated, wherein the speech is identified by processing frequencies likely to contain human speech; and
selectively display a facial region (44) comprising a facial feature (46) from the first image data (16a) on a first portion (32a) of the screen (32) in response to a detection of the display prompt, the facial region being from the determined particular region.

2. The display system (12) according to claim 1, wherein the controller is further configured to:
continue to display the facial region (44) on the first portion (32a) until the speech of the occupant is no longer detected for a predetermined period of time.

3. The display system (12) according to any one of claims 1-2, wherein the first portion (32a) of the screen (32) corresponds to a display window (42) superimposed over the second portion (32b).

4. The display system (12) according to any one of claims 1-3, wherein the controller (40) is further configured to:
identify and crop the facial region (44) of the occupant in the first image data (16a).

## Patentansprüche

1. Ein Anzeigesystem (12) für ein Fahrzeug (10), das Folgendes umfasst:
eine Rückblick-Anzeigevorrichtung (26), die eine elektrochrome Spiegelanordnung ist, die in einem Fahrgastraum (18) des Fahrzeugs (10) angeordnet ist, wobei die Anzeigevorrichtung (26) einen Bildschirm (32) umfasst, wobei ein Mikrofon-Array in der Rückblick-Anzeigevorrichtung (26) angeordnet ist, wobei der Mikrofon-Array so konfiguriert ist, dass er Sprache aus dem Fahrgastraum erfasst und einen Bereich (54a; 54b; 54c) des Fahrgastraums identifiziert, aus dem die Sprache eines Insassen stammt;
einen ersten Bildgeber (14a), der so konfiguriert ist, dass er erste Bilddaten (16a) erfasst, die einem Sichtfeld (17) des Fahrgastraums (18) des Fahrzeugs (10) entsprechen;
einen zweiten Bildgeber (14b), der so konfiguriert ist, dass er zweite Bilddaten (16b) erfasst, die einem aus dem Fahrzeug nach hinten gerichteten Sichtfeld (21) (10) entsprechen; und
ein Steuergerät (40), das konfiguriert ist, um Folgendes zu bewerkstelligen:
Anzeigen der zweiten Bilddaten (16b) auf einem zweiten Abschnitt (32b) des Bildschirms (32); und
Erfassen einer Anzeigeaufforderung auf der Grundlage von erfasster Sprache, wobei die Anzeigeaufforderung die erfasste Sprache eines Insassen im Fahrgastraum umfasst;
Bestimmen eines spezifischen Bereichs (54a; 54b; 54c), aus dem die Sprache stammt, wobei die Sprache durch Verarbeiten von Frequenzen identifiziert wird, die wahrscheinlich menschliche Sprache enthalten; und
selektiv Anzeigen eines Gesichtsbereichs (44), der ein Gesichtsmerkmal (46) aus den ersten Bilddaten (16a) umfasst, auf einem ersten Abschnitt (32a) des Bildschirms (32) als Reaktion auf eine Erfassung der Anzeigeaufforderung, wobei der Gesichtsbereich aus dem bestimmten spezifischen Bereich stammt.

2. Das Anzeigesystem (12) nach Anspruch 1, wobei die Steuereinheit ferner konfiguriert ist, um Folgendes zu bewerkstelligen:
Fortsetzen des Anzeigens des Gesichtsbereichs (44) auf dem ersten Abschnitt (32a), bis die Sprache des Insassen für eine vorbestimmte Zeitspanne nicht mehr erfasst wird.

3. Das Anzeigesystem (12) nach irgendeinem der Ansprüche von 1 bis 2, wobei der erste Abschnitt (32a) des Bildschirms (32) einem Anzeigefenster (42) entspricht, das über dem zweiten Abschnitt (32b) liegt.

4. Das Anzeigesystem (12) nach irgendeinem der Ansprüche von 1 bis 3, wobei das Steuergerät (40) ferner dazu konfiguriert ist, Folgendes zu bewerkstelligen:
Identifizieren und Zuschneiden des Gesichtsbereichs (44) des Insassen in den ersten Bilddaten (16a).

## Revendications

1. Un système d'affichage (12) pour un véhicule (10) comprenant :
un dispositif d'affichage rétroviseur (26) qui est un ensemble miroir électrochromique disposé dans un habitacle (18) du véhicule (10), le dispositif d'affichage (26) comprenant un écran (32), sachant qu'un réseau de microphones est agencé dans le dispositif d'affichage rétroviseur (26), sachant que le réseau de microphones est configuré pour détecter la parole (speech) provenant de l'habitacle et pour identifier une région (54a ; 54b ; 54c) de l'habitacle d'où provient la parole d'un occupant ;
un premier imageur (14a) configuré pour capturer des premières données d'image (16a) correspondant à un champ de vision (17) de l'habitacle (18) du véhicule (10) ;
un deuxième imageur (14b) configuré pour capturer des deuxièmes données d'image (16b) correspondant à un champ de vision dirigé vers l'arrière (21) depuis le véhicule (10) ; et
un dispositif de commande (40) configuré pour :
afficher les deuxièmes données d'image (16b) sur une deuxième portion (32b) de l'écran (32) ; et pour
détecter une invite d'affichage basée sur la parole détectée, sachant que l'invite d'affichage comprend la parole détectée d'un occupant dans l'habitacle ;
déterminer une région particulière (54a ; 54b ; 54c) d'où provient la parole, sachant que la parole est identifiée par le traitement de fréquences susceptibles de contenir de la parole humaine ; et pour
afficher sélectivement une région faciale (44) comprenant une caractéristique faciale (46) à partir des premières données d'image (16a) sur une première portion (32a) de l'écran (32) en réponse à une détection de l'invite d'affichage, la région faciale provenant de la région particulière déterminée.

2. Le système d'affichage (12) d'après la revendication 1, sachant que le dispositif de commande est en outre configuré pour :
continuer à afficher la région faciale (44) sur la première portion (32a) jusqu'à ce que la parole de l'occupant ne soit plus détectée pendant une période de temps prédéterminée.

3. Le système d'affichage (12) d'après l'une quelconque des revendications de 1 à 2, sachant que la première portion (32a) de l'écran (32) correspond à une fenêtre d'affichage (42) superposée à la deuxième portion (32b).

4. Le système d'affichage (12) d'après l'une quelconque des revendications de 1 à 3, sachant que le dispositif de commande (40) est en outre configuré pour :
identifier et recadrer la région faciale (44) de l'occupant dans les premières données d'image (16a).
